# EUROPEAN PATENT APPLICATION

(11) **EP 3 636 071 A1**
(43) Date of publication of application: **15.04.2020**
(21) Application number: 19250001.5
(22) Date of filing: 11.01.2019
(51) Int. Cl.: A01K 27/00

(54) **P-SHAPED PET LEASH**

(30) Priority: 11.10.2018 CN 201821651098 U
(71) Applicant: Liu, Chun-Chien, Huatan Township, Changhua County 50353 (TW)
(72) Inventor: Liu, Chun-Chien, Huatan Township, Changhua County 50353 (TW)
(74) Representative: Brown, Michael Stanley

(57) **Abstract**

A P-shaped pet leash comprises a strap having a first end and a second end, a snap hook connected to the first end, a retention ring connected to the second end, a handhold adjustment ring and a collar adjustment ring movably kept on the strap adjacent to the snap hook and the retention ring respectively. The snap hook is connected to the handhold adjustment ring, a resizable handhold is formed at the strap near the first end for a user to hold, sling across the user's shoulder, tie to the user's waist, or to tie the handhold to a ground object. The retention ring is connected to the collar adjustment ring, a pre-adjusted sized collar is formed at the strap near the second end to prevent the collar from tightening during the pet storm.

## Description

### BACKGROUND OF THE INVENTION

### 1. Field of the Invention

The present invention relates to a pet traction device, and more particularly to a P-shaped pet leash.

### 2. Description of the Prior Art

The favorite hobby of many pet owners is walking with their pets. For example, many owners of dogs and cats take their pets out for walks every day or almost every day. Unfortunately, this can lead to unnecessary encounters. For example, pets may attack other animals or people. In addition, pets may be distracted by running away or into the streets, where they may be beaten or hit by a car and injured or even killed. Because of these dangers, many cities require pets to use traction devices outdoors.

In various types of pet traction devices, P-shaped pet leashes are widely used because they have both functions of general leash and collar. The main function of the P-shaped pet leash is to give a short, sudden discomfort and shock to the pet when it does not listen to orders, in order to achieve the deterrent effect. The attached function is that when the pet storm, the collar will automatically tighten and press the throat, so that the pet slowly calm down because of discomfort, not so excited, so as to achieve the effect of preventing the pet storm. When the pet stops acting madly, the collar automatically slackens. As a result, the P-shaped pet leash is also known as choker leash.

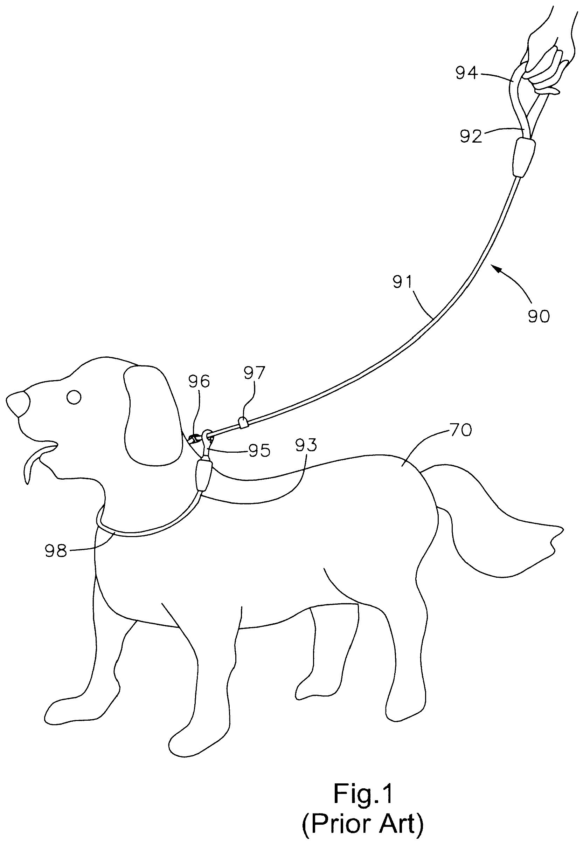

Referring to Fig. 1, a typical P-shaped pet leash 90 includes a strap 91 having a first end 92 and a second end 93. The first end 92 is turned backwards and stitched to the strap 91 to form a handhold 94 for a user to hold or tie to a ground object, such as tree trunks, posts, railings, chairs, etc. The P-shaped pet leash 90 also includes a snap hook 95 connected to the second end 93, and an adjustment ring 96 and a stopper 97 mounted on the strap 91 which can be moved artificially. The snap hook 95 is connected between the adjustment ring 96 and the stopper 97 to form a collar 98 around the neck of a pet 70 at the strap 91. The collar 98 can be reset to fit the neck circumference of the pet 70 by moving on the strap 91with the adjustment ring 96.

Although the conventional P-shaped pet leash 90 can be used to deter pets in the event that they do not listen to orders and storms, there are still the following deficiencies:
Firstly, the handhold cannot be adjusted: the handhold 94 is formed by turning the first end 92 backwards and stitching it to the strap 91, once the handhold 94 is formed, the size is fixed and cannot be adjusted freely.
Secondly, the use method is limited: the users can only hold the handhold 94 or tie it to the ground object, which is lack of change.
Thirdly, it is difficult to effectively control the pet storm: although the collar 98 can be reset by moving the adjustment ring 96, when the pet storm, the adjustment ring 96 is easily moved forward by the snap hook 95, making the pet 70 more likely to suffocate by the collar 98 tightening. In severe cases, it can cause coma and even death.

The present invention has arisen to mitigate and/or obviate the afore-described disadvantages.

### SUMMARY OF THE INVENTION

The primary object of the present invention is to provide a P-shaped pet leash having a resizable handhold, which can be used in different ways to restrain a pet according to the need.

The other object of the present invention is to provide a P-shaped pet leash that keeps the collar at a pre-adjusted size to prevent it from tightening during the pet storm.

The further object of the present invention is to provide a P-shaped pet leash that can produce two traction contacts with a pet or restrain two pets at a time.

To achieve the above objects, the P-shaped pet leash comprising a strap having a first end and a second end; a handhold adjustment ring being movably kept on the strap near the first end; a snap hook being connected to the first end of the strap and the handhold adjustment ring, so as to form a handhold at the strap that is resized with the handhold adjustment ring moving on the strap; a collar adjustment ring being movably kept on the strap near the second end; and a retention ring being connected to the second end of the strap, and the strap passes through the retention ring to form a collar that is resized with the collar adjustment ring moving on the strap.

In another embodiment, the handhold adjustment ring includes a main ring body and an auxiliary ring body, the main ring body is defined with an upper hole and a lower hole by a crosspiece, the strap passes through the upper hole and the lower hole of the main ring body, so that the handhold adjustment ring is movably kept on the strap, the auxiliary ring body is connected to the crosspiece, and the snap hook is connected to the auxiliary ring body.

In another embodiment, the collar adjustment ring includes a ring body and an extension portion, the ring body is defined with an upper hole and a lower hole by a crosspiece, the strap passes through the upper hole and the lower hole of the ring body, so that the collar adjustment ring is movably kept on the strap, the extension portion is formed at the upper end of the ring body and is defined with a slot for engaging the retention ring, so as to make the retention ring connected to the collar adjustment ring, such that the collar is kept at a pre-adjusted size.

In another embodiment, a stopper is mounted on the strap near the collar adjustment ring and is movably, the retention ring is restricted to slide between the stopper and the collar adjustment ring.

In contrast to the prior art, the present invention has the following advantages: by connecting a snap hook to a handhold adjustment ring, a handhold can be formed at the strap near the first end and can be resized with the handhold adjustment ring moving on the strap for a user to hold, sling across the user's shoulder, tie to the user's waist, or to tie the handhold to a ground object according to the need, so as to enhance flexibility in use.

In addition, a retention ring can be connected to a collar adjustment ring, so as to make the collar kept at a pre-adjusted size to avoid tightening during the pet storm. The retention ring can also not be connected to the collar adjustment ring, so that the collar can slide between the collar adjusting ring and a stopper along with the holding ring, achieve the function of automatically adjusting the size.

Moreover, the snap hook can be connected to a restraint device and cooperates with the collar around the neck of the pet to form two traction contacts between the P-shaped pet leash and the pet, so that the traction safety is doubled. The snap hook can also be connected to another pet's restraint device to restrain two pets at a time.

The present invention will become more obvious from the following description when taken in connection with the accompanying drawings, which show, for purpose of illustrations only, the preferred embodiments in accordance with the present invention.

### BRIEF DESCRIPTION OF THE DRAWINGS

Fig. 1 is a perspective view of using a conventional P-shaped pet leash;
Fig. 2 is a perspective view of a P-shaped pet leash in accordance with the present invention;
Fig. 3 is a perspective view of a handhold adjustment ring in accordance with the present invention;
Fig. 4 is a perspective view of a collar adjustment ring in accordance with the present invention;
Fig. 5 is a perspective view of a pet being restrained by a user's hand in accordance with the present invention;
Fig. 6 is a perspective view of the pet being restrained by sling across the user's shoulder in accordance with the present invention;
Fig. 7 is a perspective view of the pet being restrained by tying to the user's waist in accordance with the present invention;
Fig. 8 is a perspective view of the pet being tying to a ground object in accordance with the present invention;
Fig. 9 is a perspective view of a collar being kept at a pre-adjusted size in accordance with the present invention;
Fig. 10 is a perspective view of the collar capable of resizing automatically in accordance with the present invention;
Fig. 11 is a perspective view of forming two traction contacts between the P-shaped pet leash and the pet in accordance with the present invention; and
Fig. 12 is a perspective view of restraining two pets at a time in accordance with the present invention.

### DETAILED DESCRIPTION OF THE PREFERRED EMBODIMENTS

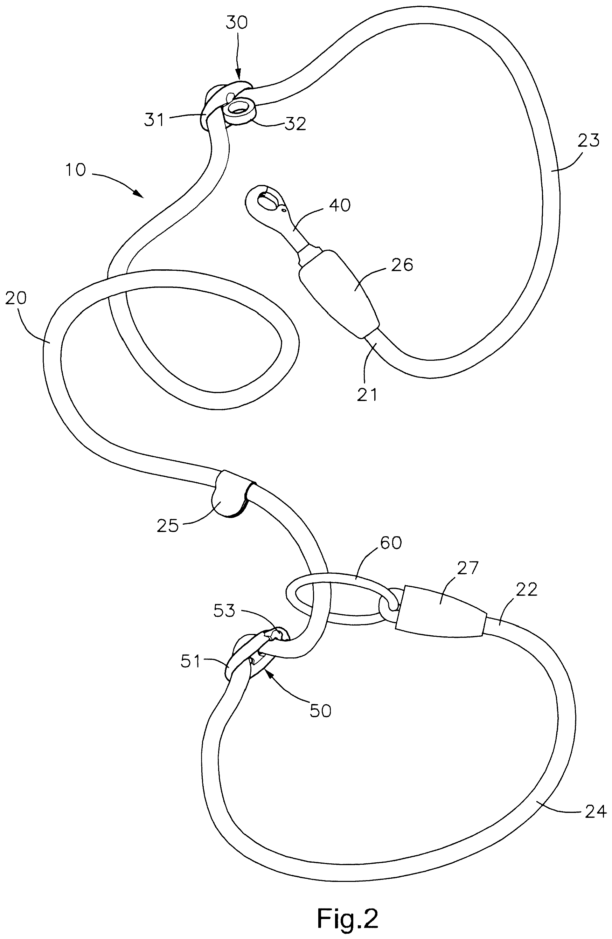

Referring to Fig. 2, a P-shaped pet leash 10 in accordance with the present invention comprises a strap 20 that is made of materials capable of bearing the pull of a user and a pet, such as nylon ribbons, leather, etc., in a desired length and cross-section shape. The strap 20 having a first end 21 and a second end 22, the first end 21 is connected to a snap hook 40, and the second end 22 is connected to a retention ring 60.

Referring to Figs. 2-3, the P-shaped pet leash 10 further includes a handhold adjustment ring 30 that is integrally formed by metal (such as zinc alloy, aluminum alloy, etc.) or non-metal (such as engineering plastics) and comprises a main ring body 31 and an auxiliary ring body 32. The main ring body 31 is defined with an upper hole 34 and a lower hole 35 by a crosspiece 33. The strap 20 passes through the upper hole 34 and the lower hole 35, so that the handhold adjustment ring 30 is kept on the strap 20 near the first end 21 and can be moved artificially. The auxiliary ring body 32 is connected to the crosspiece 33 and intersects vertically with the main ring body 31, and its function is left to be mentioned later.

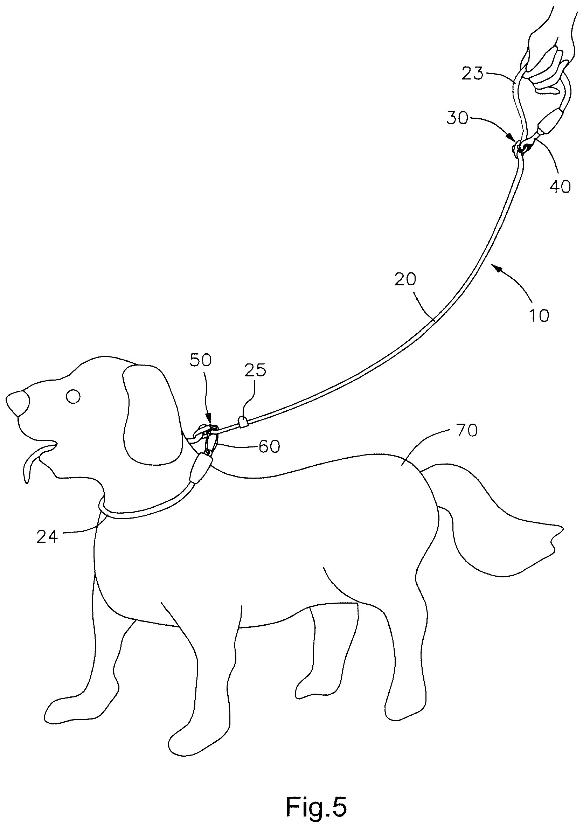

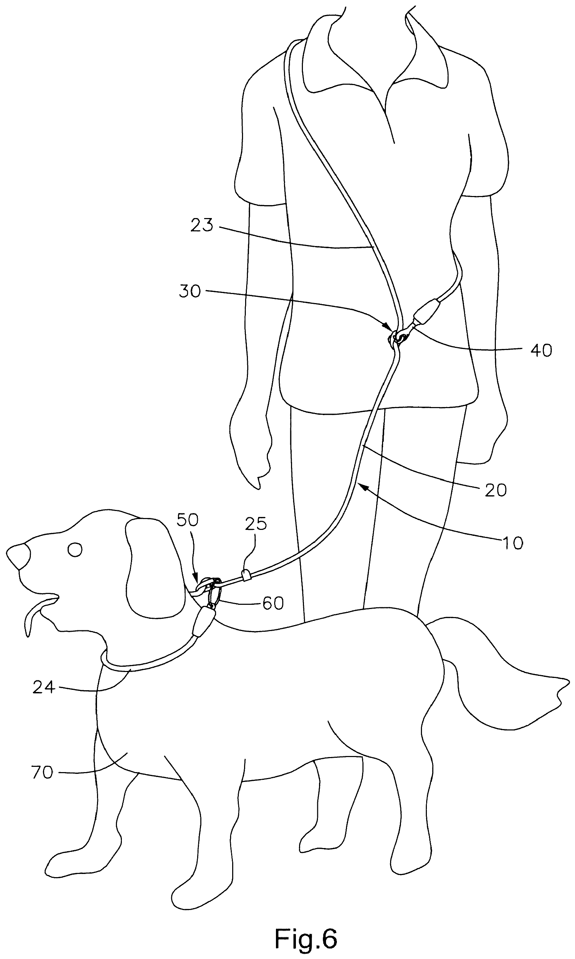

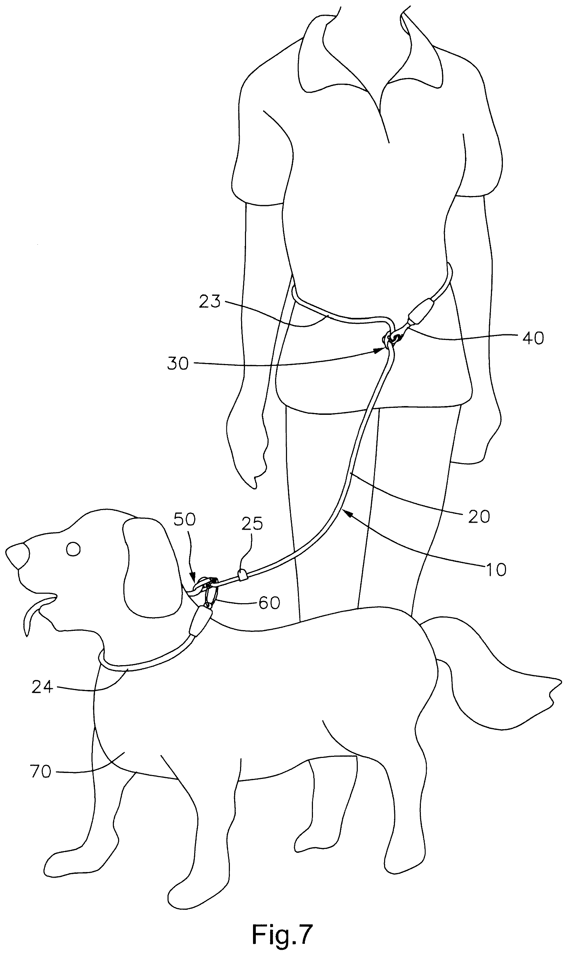

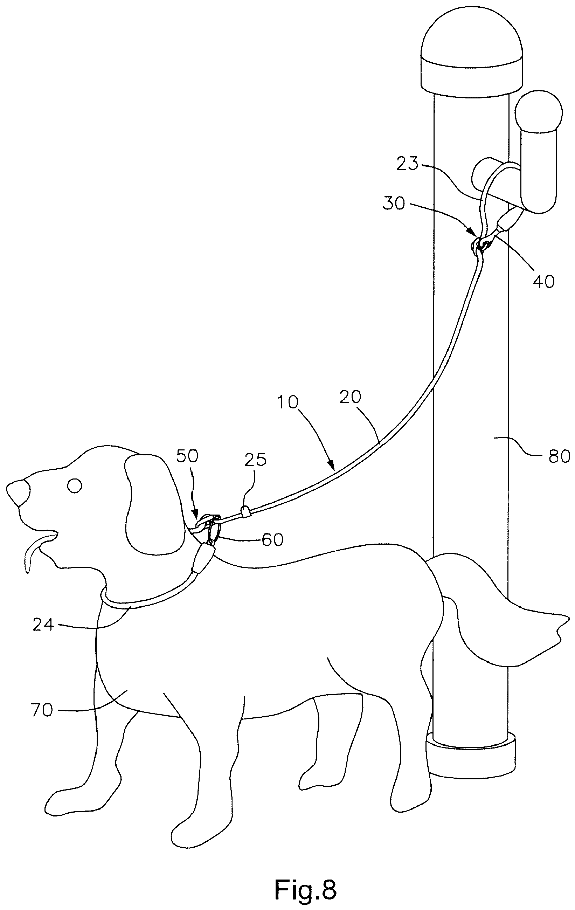

Referring to Figs. 2-3 again, the first end 21 of the strap 20 passes through the snap hook 40 and then turns backwards and stitches to the strap 20, so that the snap hook 40 is connected to the first end 21 of the strap 20, and a shield sleeve 26 is used to protect the joint to avoid loosening and adding beauty. By connecting the snap hook 40 to the auxiliary ring body 32 of the handhold adjustment ring 30, the snap hook 40 can be connected to the handhold adjustment ring 30, so that the strap 20 can use a partial length thereof, that is, from the handhold adjustment ring 30 to the snap hook 40 via the first end 21, to form a handhold 23 for the user to hold (Fig. 5), sling across the user's shoulder (Fig. 6), tie to the user's waist (Fig. 7), so as to control the pet 70, or to tie the handhold 23 to a ground object 80 (Fig. 8), such as tree trunks, posts, railings, chairs, etc., which enables the pet 70, without the user's company and centered on the ground object 80, to move freely within the radius of the effective length of the P-shaped pet leash 10. The handhold 23 can be resized with the handhold adjustment ring 30 moving on the strap 20 to accommodate the different traction methods described above. When the handhold 23 cannot be fastened to the ground object 80, the snap hook 40 can be released directly from the handhold adjustment ring 30 and then hooked to the ground object 80, which can also fasten the pet 70, improving the use of flexibility. Since the snap hook 40 is a conventional technique, it is not necessary to further explain it.

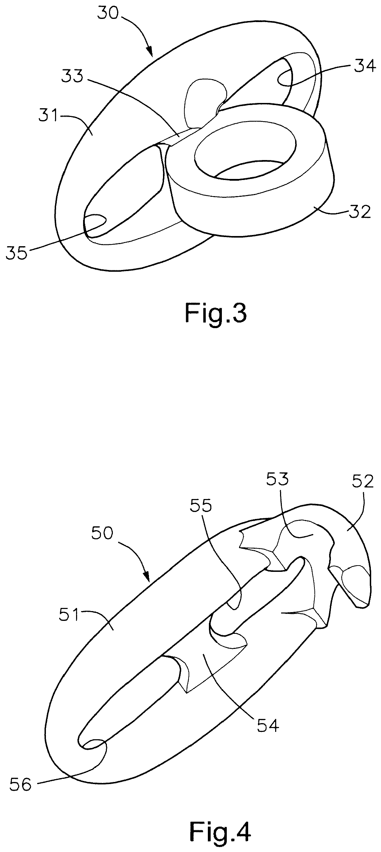

Referring to Figs. 2 and 4, the P-shaped pet leash 10 further includes a collar adjustment ring 50 that is made of the same material as the handhold adjustment ring 30, and comprises a ring body 51 and an extension portion 52. The ring body 51 is defined with an upper hole 55 and a lower hole 56 by a crosspiece 54. The strap 20 passes through the upper hole 55 and the lower hole 56, so that the collar adjustment ring 50 is kept on the strap 20 near the second end 22 and can be moved artificially. The extension portion 52 is formed at the upper end of the ring body 51 to provide a slot 53 connecting the retention ring 60.

Referring to Figs. 2 and 4 again, the retention ring 60 is made of steel bars in D-shaped, circular, oval, or quadrilateral shapes. The second end 22 of the strap 20 passes through the retention ring 60 and then turns backwards and stitches to the strap 20, so that the retention ring 60 is connected to the second end 22 of the strap 20, and a shield sleeve 27 is used to protect the joint to avoid loosening and adding beauty. By engaging the retention ring 60 in the slot 53, the retention ring 60 can be connected to the collar adjustment ring 50, so that the strap 20 can use a partial length thereof, that is, from the collar adjustment ring 50 to the retention ring 60 via the second end 22, to form a collar 24 around the neck of the pet, and the collar 24 can be adjusted to fit the size of the neck circumference of the pet as the collar adjustment ring 50. When the retention ring 60 is connected to the collar adjustment ring 50, the collar 24 can be kept at a pre-adjusted size to avoid tightening during the pet storm.

Referring to Figs. 5-8, when the snap hook 40 is hooked to the handhold adjustment ring 30, the handhold 23 is formed at the strap 20 near the first end 21, which is resizable and is provided for the user to hold (Fig. 5), sling across the user's shoulder (Fig. 6), and tie to the user's waist (Fig. 7), or to tie the handhold 23 to the ground object 80 (Fig. 8), so as to enhance flexibility in use. When the handhold 23 is not suitable for fastening to the ground object 80, the snap hook 40 can be released directly from the handhold adjustment ring 30 and then hooked to the ground object 80, so that the user can choose the suitable fastening method of the P-shaped pet leash 10 according to the form of the ground object 80.

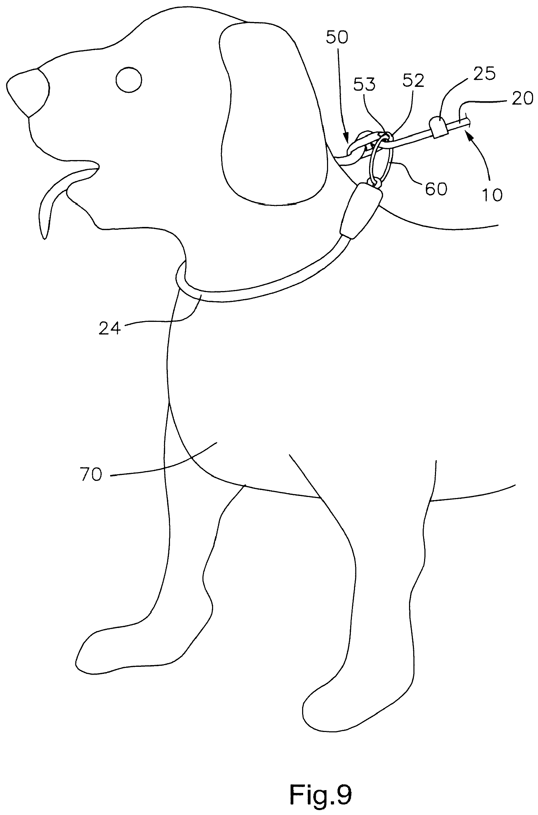

Referring to Fig. 9, when the retention ring 60 is connected to the collar adjustment ring 50, the pre-adjusted sized collar 24 can be formed at the strap 20 near the second end 22 to prevent the collar 24 from tightening during the pet storm and the pet from choking under the pressure of the pet throat.

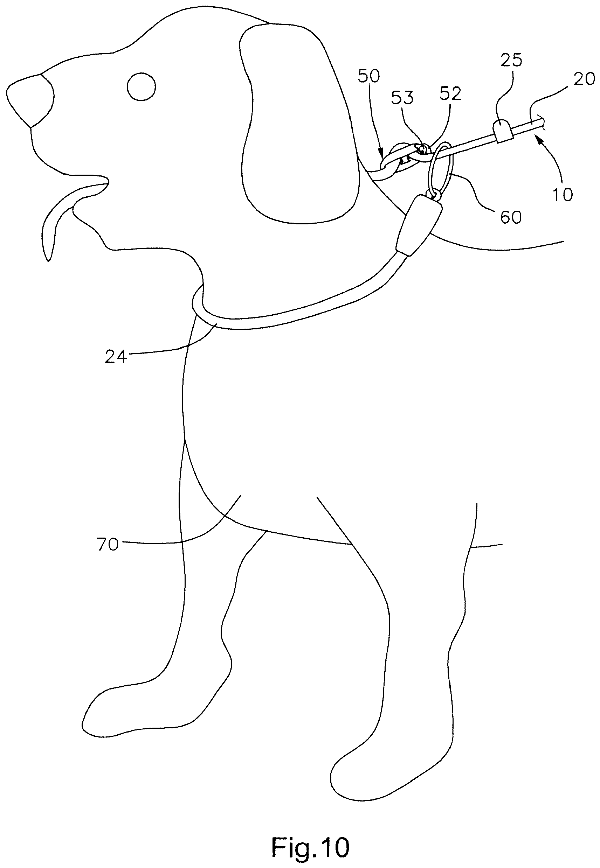

Referring to Fig. 10, the retention ring 60 may also not be connected to the collar adjustment ring 50. This use method is to be implemented in conjunction with a stopper 25 mounted on the strap 20 near the collar adjustment ring 50 and can be moved artificially. The retention ring 60 is restricted to slide between the stopper 25 and the collar adjustment ring 50, so that the collar 24 has the function of automatically adjusting the size within the range.

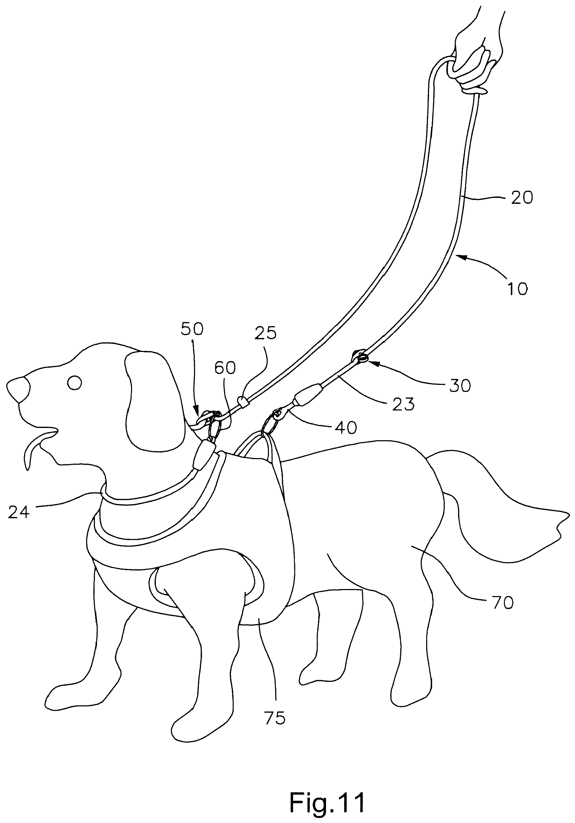

Referring to Fig. 11, when restraining the pet 70, in addition to using the collar 24 around the pet neck, the snap hook 40 can also be connected to a restraint device 75 of the pet 70, such as harness, collar, etc., so as to form two traction contacts between the P-shaped pet leash 10 and the pet 70. This method has the effect of double the safety of connecting pet with the collar 24 only.

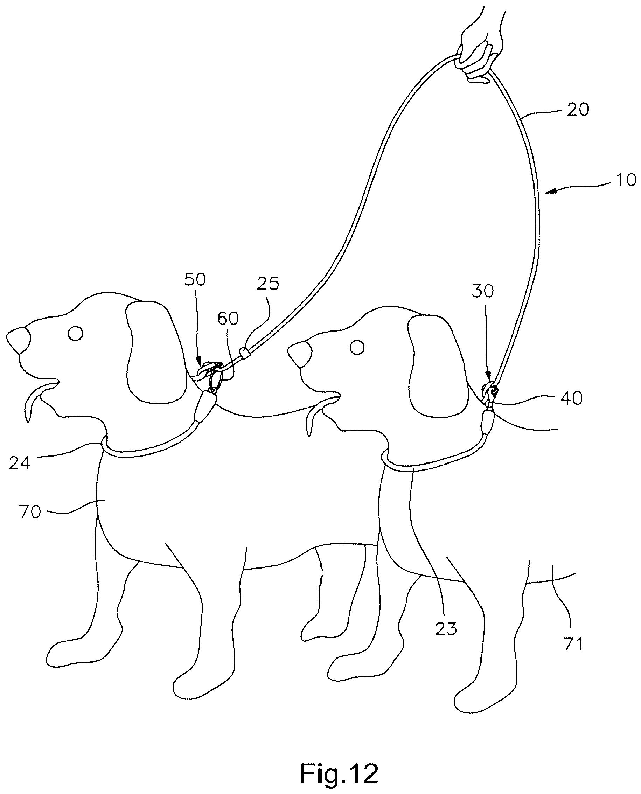

Referring to Fig. 12, the collar 24 can also be used around the neck of the pet 70, the handhold 23 as another collar and around the neck of the other pet 71 to achieve the function of restraining two pets 70, 71 at a time.

Moreover, the present invention is not limited to the above embodiments, and may also be used in other different forms, such as retaining the components forming the handhold 23, including the handhold adjustment ring 30 and the snap hook 40, and the portion defining the collar 24 following the conventional technique. Alternatively, the portion forming the collar 24 is retained, including the collar adjustment ring 50 and the retention ring 60, and the portion defining the handhold 23 follows the conventional technique. The conventional technique includes, but is not limited to, the P-shaped pet belt 90 disclosed in Fig. 1.

While we have shown and described various embodiments in accordance with the present invention, it should be clear to those skilled in the art that further embodiments may be made without departing from the scope of the present invention.

## Claims

1. A P-shaped pet leash (10) comprising:
a strap (20) having a first end (21) and a second end (22);
a handhold adjustment ring (30) being movably kept on the strap (20) near the first end (21);
a snap hook (40) being connected to the first end (21) of the strap (20) and the handhold adjustment ring (30), so as to form a handhold (23) at the strap (20) that is resized with the handhold adjustment ring (30) moving on the strap (20);
a collar adjustment ring (50) being movably kept on the strap (20) near the second end (22); and
a retention ring (60) being connected to the second end (22) of the strap (20), and the strap (20) passes through the retention ring (60) to form a collar (24) that is resized with the collar adjustment ring (50) moving on the strap (20).

2. The P-shaped pet leash (10) as claimed in claim 1, wherein the handhold adjustment ring (30) includes a main ring body (31) and an auxiliary ring body (32), the main ring body (31) is defined with an upper hole (34) and a lower hole (35) by a crosspiece (33), the strap (20) passes through the upper hole (34) and the lower hole (35) of the main ring body (31), so that the handhold adjustment ring (30) is movably kept on the strap (20), the auxiliary ring body (32) is connected to the crosspiece (33), and the snap hook (40) is connected to the auxiliary ring body (32).

3. The P-shaped pet leash (10) as claimed in claim 1, wherein the collar adjustment ring (50) includes a ring body (51) and an extension portion (52), the ring body (51) is defined with an upper hole (55) and a lower hole (56) by a crosspiece (54), the strap (20) passes through the upper hole (55) and the lower hole (56) of the ring body (51), so that the collar adjustment ring (50) is movably kept on the strap (20), the extension portion (52) is formed at the upper end of the ring body (51) and is defined with a slot (53) for engaging the retention ring (60), so as to make the retention ring (60) connected to the collar adjustment ring (50), such that the collar (24) is kept at a pre-adjusted size.

4. The P-shaped pet leash (10) as claimed in claim 1, further comprising a stopper (25) which movably kept on the strap (20) near the collar adjustment ring (50), the retention ring (60) is restricted to slide between the stopper (25) and the collar adjustment ring (50).
